# EUROPÄISCHE PATENTANMELDUNG

(11) **EP 3 564 909 A1**
(43) Veröffentlichungstag der Anmeldung: **06.11.2019**
(21) Anmeldenummer: 19171479.9
(22) Anmeldetag: 29.04.2019
(51) Int. Cl.: G07B 17/00

(54) **GUTVERARBEITUNGSGERÄT**

(30) Priorität: 03.05.2018 DE 202018102464 U; 26.06.2018 DE 202018103618 U
(71) Anmelder: Francotyp-Postalia GmbH, 13089 Berlin (DE)
(72) Erfinder: Ortmann, Axel, 13189 Berlin (DE); Von der Waydbrink, Karsten, 14482 Potsdam (DE); Lorenzen, Matthias, 12357 Berlin (DE); Nicolai, Kai, 12683 Berlin (DE); Höfig, Robert, 13086 Berlin (DE); Reisinger, Tobias, 16515 Oranienburg (DE)

(57) **Zusammenfassung**

Ein Gutverarbeitungsgerät ist mit einer Steuereinheit und einem Mittel zur Kommunikation mit einem von dem Gutverarbeitungsgerät entfernten Server des Herstellers des Gutverarbeitungsgeräts und mit einem Sicherheitsmodul ausgestattet. Das Sicherheitsmodul ist für eine sichere Kommunikation mindestens mit dem entfernten Server (40, 40*) vorgesehen und mit der Steuereinheit (7, 7*) elektrisch verbunden. Die Steuereinheit (7, 7*) enthält einen Programmspeicher (72, 72*) mit einem Programm zur Steuerung der akustischen Ausgabe, wobei das Programm so ausgebildet ist, dass externe Befehle von dem entfernten Server des Herstellers des Gutverarbeitungsgeräts oder aus anderen Quellen (60, 60*) des Internets zur Steuereinheit (7, 7*) übermittelt werden können, wobei durch Sicherheitsmaßnahmen verhindert wird, dass die Betriebssicherheit des Gutverarbeitungsgeräts beeinträchtigt oder Schadenscode übermittelt wird. (Fig. 5)

## Beschreibung

Die Erfindung betrifft ein Gutverarbeitungsgerät gemäß dem Oberbegriff des Patentanspruchs 1. Das Gutverarbeitungsgerät weist eine Steuereinheit auf, die mit Ein- und Ausgabemitteln verbunden ist. Die üblichen Ein- und Ausgabemittel werden durch akustische Ein- und/oder Ausgabemittel ergänzt. Das Gutverarbeitungsgerät ist beispielsweise eine smarte Frankiermaschine. Die smarte Frankiermaschine ist mit einer Steuereinheit, einer Tintendruckvorrichtung zur Erzeugung von Abdrucken auf einen Druckträger, Kommunikationsmitteln und mit manuellen Eingabemitteln, mit einem optischen Ausgabemittel sowie mindestens mit einem akustischen Ausgabemittel ausgestattet. Optional sind akustische Eingabemittel bzw. externe Kommunikationsgeräte mit einem eingebauten akustischen Eingabemittel vorgesehen, die via Internet mit einem Gutverarbeitungsgerät, insbesondere einer Frankiermaschine, kommunizieren.

Wenn nachfolgend von einem Druckträger gesprochen wird, sollen dadurch andere Druckmedien, wie flache Güter, Poststücke, Briefkuverts, Postkarten und dergleichen davon nicht ausgeschlossen werden, in einem druckenden Gutverarbeitungsgerät, wie beispielsweise einer Frankiermaschine verarbeitet zu werden, welches die beanspruchten erfinderischen Merkmale aufweist.

Eine Frankiermaschine des Typs PostBase® hat eine Tintendruckvorrichtung bestehend aus einem Druckmodul, einem Transportmodul für Druckträger, einem Andruckmodul zum Andrücken der Druckträger an das Transportmodul. Ein modernes Touchscreen-Display gestattet bereits eine manuelle Eingabe und optische Ausgabe mit ein und demselben Gerät.

Aus dem Europäischen Patent 1.146.484 B1 (US 6.829.633 B2) ist ein Endgerät (Frankiermaschine, Waage oder PC) bekannt, welches Mittel aufweist, um Sound-Dateien zu verarbeiten und wiedergeben zu können. Ein Server einer Service-Zentrale liefert via Modem/Internet komprimierte digitale Video- und MP3-Dateien die in ein PC-Endgerät oder in eine Frankiermaschine heruntergeladen und auf Flash Memory gespeichert werden. Dadurch wird es möglich, den Bediener über neuste Funktionsmerkmale von Endgeräten oder Sonderangebote eines Herstellers zu informieren. Jedoch wurde die Ausgestaltung einer Frankiermaschine mit der o.g. Funktion nicht genauer mitgeteilt. Bekannte Frankiermaschinen können zwar digitale Daten verarbeiten und speichern, aber sie haben gewöhnlich keinen Lautsprecher, um Audio- bzw. Sound-Dateien wiedergeben zu können. Sie haben teilweise nicht genügend Speicherkapazität, um Audio- bzw. Sound-Dateien speichern zu können. Frankiermaschinen geben außerdem einen intensiven Körperschall ab, der eine erhebliche Geräuschbelästigung darstellen kann.

Aus dem deutschen Gebrauchsmuster DE 20 2007 008 565 U1 ist ein Dienstgerät mit Zusatzgeräteanschluss bekannt. Das Dienstgerät ist eine Frankiermaschine, die Hardware- und ein Software-Mittel aufweist, welche geeignet sind, in das Dienstgerät geladene komprimierte Daten auf ein externes nichtflüchtiges Speichermittel seriell weiter zu übertragen, wobei ein Zusatzgeräteanschluss vorgesehen ist, der an das serielle Übertragen von digitalen Daten angepasst ist. Das Zusatzgerät ist zur Wiedergabe von Audio-Dateien im MP3-Format ausgestattet.

Ein mit dem Internet verbundener Lautsprecher, der Musik drahtlos überträgt und per eingriffsfreier Sprachsteuerung und Spracherkennung die Funktionen eines intelligenten Persönlichen Assistenten (IPA) integriert, ist bereits von der Firma Amazon bekannt und wird auch als smarter Lautsprecher bezeichnet. Eine Interaktion mit einer kundenspezifischen Fähigkeit ist bereits aus dem Internet bekannt:
- https://developer.amazon.com/docs/ask-overviews/understanding-the-different-types-of-skills.html
- https://developer.amazon.com/docs/custom-skills/understanding-custom-skills.html
- https://developer.amazon.com/docs/ask-overviews/alexa-skills-kit-glossary.html
- https://developer.amazon.com/docs/ask-overviews/understanding-how-users-interact-with-skills.html

Beispielsweise hat die Firma Amazon eine geeignete Infrastruktur entwickelt. Basierend auf der vorangegangenen Spracheingabe, sendet der Server der Firma Amazon dem Empfänger per REST Interface (HTTPS) Nachrichten, siehe auch https://en.wikipedia.org/wiki/Representational_state_transfer.

Geräte, wie smarte Lautsprecher, wie "Echo" von Amazon und andere Geräte mit künstlichen Intelligenzen, wie Alexa von Amazon und der Google Assistent können uns eigentlich simple Aufgaben wie das Einschalten von Lampen und das Bedienen der Musikanlage abnehmen. Bekanntlich können die Geräte mitunter auf falsche Signalwörter reagieren, denn die Mikrofone in den smarten Lautsprechern sind immer aktiv. Bei einem Geräusch, dessen Schallwellen denen des Aktivierungsbegriffs ähnlich genug sind, aktivieren die Geräte die virtuellen Assistenten und damit die Datenübertragung zu den Servern der Anbieter.

Die Eindeutigkeit einer Wellenform hängt von mehreren Faktoren ab, wie beispielsweise von der Nähe des Sprechers zu den Mikrofonen, von den Umgebungsgeräuschen, vom Akzent und der Lautstärke der Nutzer. Die Hersteller müssen deshalb eine Schwelle für die Eindeutigkeit der Wellenform festlegen, ab der sie ihre Assistenten aktivieren. Liegt sie zu hoch, reagiert das Gerät möglicherweise nur selten auf das richtige Aktivierungswort, was nicht im Kundeninteresse sein dürfte. Die Hersteller legen deshalb die Schwelle niedrig, aber dann reicht es, ein Signal zu erzeugen, das dem des eigentlichen Aktivierungswortes ähnlich ist. So lassen sich beispielsweise Hue-Lampen von Philips über den Echo Plus vernetzen und per App und Stimme steuern. Bei simplen Aufgaben wie das Einschalten von Lampen können die Geräte mitunter auf falsche Signalwörter reagieren, was leicht durch weitere Spracheingaben korrigierbar ist. Bei smarten Frankiermaschinen könnten sich jedoch falsche Eingaben fatal auswirken.

Eine Frankiermaschine des Typs Postbase100 der Anmelderin Francotyp-Postalia GmbH ist bereits mit einem Touchscreen und einem piezo-elektrischen Schallwandler (Beeper) ausgestattet, hat aber keine weiteren akustischen Mittel zur sprachlichen Kommunikation mit einem Bediener der Frankiermaschine.

Die Aufgabe besteht darin, die Mängel der bekannten Lösungen zu beseitigen und ein Gutverarbeitungsgerät zu entwickeln, das zur akustischen Kommunikation geeignet ist. Die Ein- und Ausgabemittel eines Gutverarbeitungsgeräts sollen mindestens durch akustische Ausgabemittel ergänzt, die Audio- bzw. Sound-Dateien wiedergeben und es sollen smarte Merkmale realisiert werden, die die Bedienung des Geräts erleichtern. Die Sicherheit bei der Kommunikation des Gutverarbeitungsgeräts mindestens mit einem entfernten Server soll erhöht und die Betriebssicherheit des Gutverarbeitungsgeräts durch Sicherheitsmaßnahmen gesteigert werden.

Die Aufgabe wird mit den Merkmalen des Gutverarbeitungsgeräts nach dem Patentanspruch 1 gelöst.

Ein Gutverarbeitungsgerät, wie beispielsweise eine Frankiermaschine des Typs PostBase®, umfasst eine Steuereinheit, sowie ein Sicherheitsmodul und eine erste Kommunikations-Schnittstelle für eine sichere Kommunikation mindestens mit dem vom Aufstellungsort des Gutverarbeitungsgeräts entfernten Server des Herstellers des Gutverarbeitungsgeräts sowie Mittel zur akustischen Ausgabe von Audio- oder Sound-Dateien. Die Mittel zur akustischen Ausgabe umfassen mindestens einen elektroakustischen Wandler und einen zugehörigen Verstärker. Sie sind mit der Steuereinheit elektrisch verbunden. Ein Programmspeicher der Steuereinheit enthält ein Programm zur Steuerung der akustischen Ausgabe wobei das Programm so ausgebildet ist, dass externe Befehle von dem entfernten Server des Herstellers des Gutverarbeitungsgeräts oder aus anderen Quellen (Dienstleister A - Z) des Internets zur Steuereinheit übermittelt werden können, wobei durch Sicherheitsmaßnahmen verhindert wird, dass die Betriebssicherheit des Gutverarbeitungsgeräts beeinträchtigt oder Schadenscode übermittelt wird. Das Sicherheitsmodul und die erste Schnittstelle sind mit der Steuereinheit elektrisch verbunden und ermöglichen eine sichere Kommunikation mindestens mit dem entfernten Server des Herstellers des Gutverarbeitungsgeräts durch kryptographische Operationen. Das Sicherheitsmodul enthält sowohl private als auch öffentliche Schlüssel gespeichert, die für Unbefugte nicht auslesbar sind. Die Betriebssicherheit des Gutverarbeitungsgeräts kann durch Sicherheitsmaßnahmen, wie eine verschlüsselte Datenübertragung zwischen einem Mainboard des Gutverarbeitungsgeräts und dem entfernte Server gesteigert werden. Weiterhin kann eine Signierung von Anweisungen auf der Serverseite in Kombination mit einer Benutzeridentifikation (User-ID) und mit einem Zeitstempel (Timecode) und/oder eine Überprüfung eines TLS Zertifikats (Transport Layer Security) durch den Client vorgenommen werden.

Ein optionales Mittel zur akustischen Eingabe umfasst einen analogen Signalvorverstärker und einen A/D-Wandler, wobei der A/D-Wandler mit einer Central Processor Unit (CPU) der Steuereinheit der Frankiermaschine elektrisch verbunden ist. Der Programmspeicher der Steuereinheit enthält optional ein Programm zur Steuerung der akustischen Eingabe. Der Programmspeicher kann außerdem ein Programm mit einem Sprachassistenten gespeichert enthalten, wobei letzterer der mit dem Mittel zur akustischen Eingabe zusammenwirkt, um die Bedienung des Gutverarbeitungsgeräts durch eine Sprachsteuerung zu ermöglichen. Als Mittel zur akustischen Eingabe kann ein internes oder externes Mikrofon oder ein Headset Verwendung finden. Eine Anschlussbuchse des Gutverarbeitungsgeräts ist für ein externes Mikrofon oder Headset vorgesehen. Das interne Mikrofon kann auf einem Mainboard oder alternativ an einer geeigneten Stelle unter dem Gehäuse des Gutverarbeitungsgeräts angeordnet werden, wenn Körperschalldämpfungsmittel eingesetzt werden. Das Mainboard der Steuereinheit des Gutverarbeitungsgeräts enthält einen A/D-Wandler, der mit der Steuereinheit elektrisch verbunden ist. Vorzugsweise enthält die CPU der Steuereinheit einen internen A/D-Wandler, der über einen Signalvorverstärker mit dem internen oder externen Mikrofon elektrisch verbunden ist.

Das Gutverarbeitungsgerät ist vorzugsweise eine Frankiermaschine. Mit smarten Features kann sich eine smarte Frankiermaschine an die individuellen Bedürfnisse der Benutzer noch besser anpassen. Die Frankiermaschine des Typs PostBase® ist zusätzlichen akustischen Mitteln, inclusive einem elektroakustischen Wandler, ausgestattet, was es ermöglicht, die Kommunikation mit dem Benutzer zu verbessern. Die Software der Frankiermaschine ist mit einem Programm zur Sprachausgabe ausgestattet. Zusätzlich können Sprachassistenten, wie beispielsweise Siri, Alexa oder andere, die akustische Kommunikation verbessern. Die Sprachassistenten werden durch Apps unterstützt, welche weiter ausgebaut bzw. durch Updates aktualisiert, so dass akustische Eingaben speziell unterstützt werden.

In einer weiteren Variante des Gutverarbeitungsgeräts, beispielsweise einer Frankiermaschine, ist ebenfalls einerseits mindestens ein Mittel zur akustischen Ausgabe vorgesehen und mit der Steuereinheit elektrisch verbunden. Andererseits ist ein Mittel zur akustischen Eingabe in einem externen Kommunikationsgerät vorgesehen, wobei das Mittel zur akustischen Eingabe mindestens ein weiteres Mikrofon umfasst. Ein in dem Programmspeicher des Gutverarbeitungsgeräts gespeichertes Programm ist so ausgebildet, dass eine Spracheingabe über das externe Kommunikationsgerät zu einer Befehlsausgabe an die Steuereinheit des Gutverarbeitungsgeräts bzw. der Frankiermaschine und/oder zu einer akustischen Ausgabe über das entsprechende Mittel führt. Es sind ein entfernter Server des Frankiermaschinenherstellers und eine erste Kommunikationsverbindung des entfernten Servers mit dem Gutverarbeitungsgerät oder mit einem Personal Computer vorgesehen, wobei der Personal Computer über eine zweite Kommunikationsverbindung mit dem Gutverarbeitungsgerät in kommunikativer Verbindung steht.

Das externe Kommunikationsgerät weist eine dritte Kommunikationsverbindung zu einer externen Station eines Mobilfunkbetreibers auf, wobei der letztere über eine vierte Kommunikationsverbindung und via Internet mit einem externen Cloud-Service in kommunikativer Verbindung steht. Es ist vorgesehen, dass der entfernte Server ebenfalls via Internet mit dem externen Cloud-Service in Kommunikationsverbindung steht, dass entfernte Server bei Bedarf die erste Kommunikationsverbindung zu dem Personal Computer aufbauen kann, wobei der entfernte Server eine geeignete Software gespeichert aufweist, welche gestattet, die von dem Personal Computer ausgegebenen Befehle über die eine zweite Kommunikationsverbindung in das Gutverarbeitungsgerät einzugeben, um eine akustische Ausgabe oder einen andere ausgewählte gewünschte Aktion des Gutverarbeitungsgeräts auszulösen.

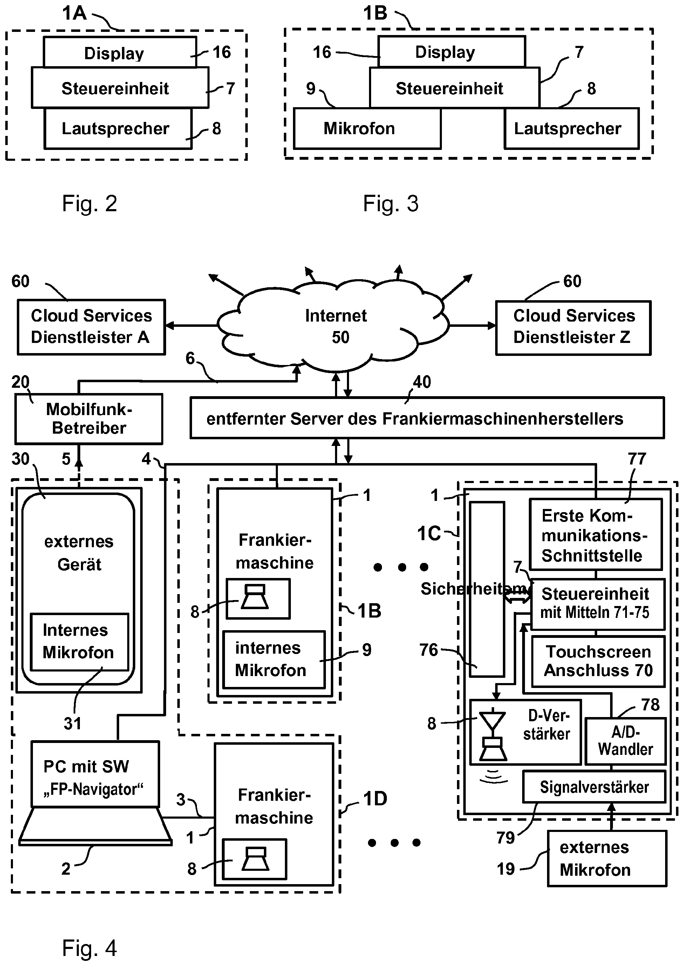

Die erste Kommunikationsverbindung kann als ein Local Area Network (LAN) realisiert werden (Fig. 4).

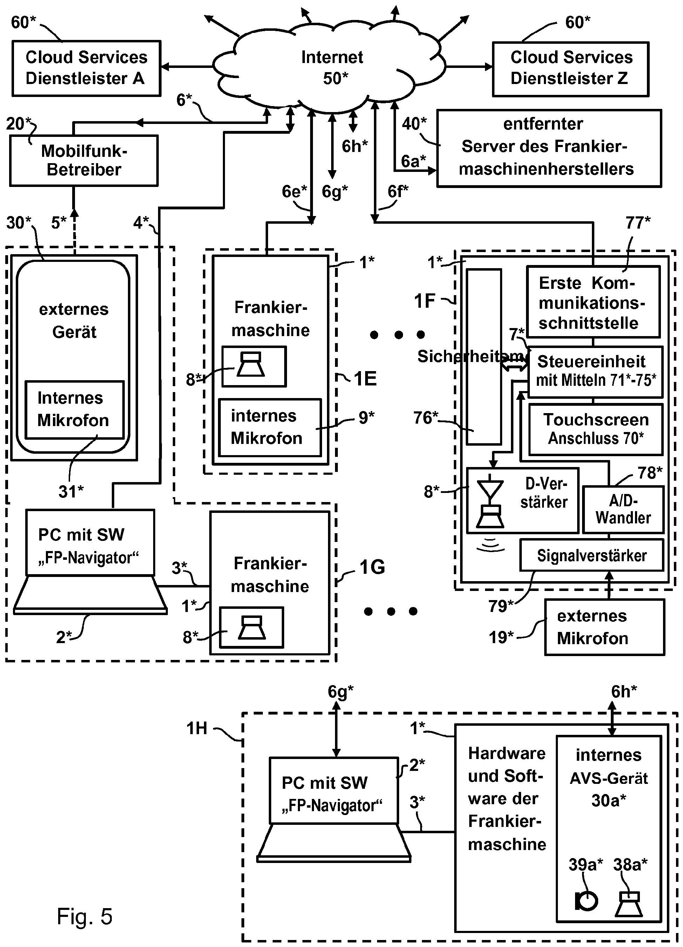

Alternativ kann der entfernte Server des Gutverarbeitungsgeräts- bzw. Frankiermaschineherstellers bei Bedarf die erste Kommunikationsverbindung zu dem Personal Computer via Internet aufbauen (Fig. 5).

Es ist weiter vorgesehen, dass das mindestens eine Mittel zur akustischen Ausgabe einen Lautsprecher als elektroakustischen Wandler einschließt, welcher auch als Schallwandler bezeichnet wird. Das Gutverarbeitungsgerät ist beispielsweise als Frankiermaschine ausgebildet, wobei eine Gehäuseoberschale eine erste Öffnung in der Oberseite aufweist, wobei ein Lautsprecher an der Unterseite der Gehäuseoberschale gekapselt montiert ist, so dass eine Membrane des montierten Lautsprechers Schallwellen durch die Öffnung abgibt. Die Dimensionen der Kapsel des Lautsprechers sind so dimensioniert, so dass ein akustischer Kurzschluss bei tiefen Tonfrequenzen vermieden wird, so dass ein annähernd linearer Frequenzgang ab 250 Hz bis 4 KHz eingehalten wird.

Die Software der Frankiermaschine wird mit einem entsprechenden Programm zur akustischen Ein- und/oder Ausgabe ausgestattet. Zur Spracherkennung und - Analyse wird eine - Sprachassistent genannte - Software, verwendet, die eine Spracheingabe mit einer Synthese von natürlich sprachigen Antworten kombiniert. Somit wird eine intuitive Schnittstelle zwischen einem Benutzer und einem Gutverarbeitungsgerät, beispielsweise einem Frankiersystem oder einer Frankiermaschine geschaffen, damit aufgrund der Spracheingabe Kommandos erzeugt werden können.

In einem Server des Herstellers der Frankiermaschinen ist eine Software vorgesehen, um solche Anweisungen auszufiltern, welche auf einigen vom Sprachassistent falsch verstandenen Signalwörter basieren oder die nicht plausibel sind. Es sind weiterhin hardware- und / oder softwarebasierte Mittel einer sicheren Kommunikation der Frankiermaschinen mit dem entfernten Server des Herstellers vorgesehen. Das hat den Vorteil, dass ein Schaden verursachender Code nicht eingeschleust werden kann.

Die Steuereinheit der Frankiermaschine erhält Schnittstellen für die akustischen Mittel und Verstärker, die mit auf dem Mainboard der Steuereinheit montiert sind. Eine Anordnung eines Lautsprechers erfolgt an einer geeigneten Stelle auf der Unterseite der Gehäuseoberschale der Frankiermaschine. Auf der Oberseite der Gehäuseoberschale der Frankiermaschine sind Blenden in beliebigen Farben und spezieller Gestaltung angeordnet. Durch eine Kapselung des Lautsprechers kann ein akustischer Kurzschluss verhindert werden. Eine Anordnung eines Mikrophons kann auf dem Mainboard oder an einer geeigneten Stelle unter dem Gehäuse (z.B. an der Frontseite) und eine Sprachverarbeitung kann in der Frankiermaschine, einem Server des Frankiermaschinenherstellers oder in einem entfernten externen Server (cloud) erfolgen. Nach einer Sprachverarbeitung in dem entfernten externen Server (cloud) beispielsweise der Firma Amazon schickt diese dem Server des Frankiermaschinenherstellers per REST Interface (HTTPS) Nachrichten, basierend auf der vorangegangenen Spracheingabe. Die Erläuterung von REST geht prinzipiell auch aus der folgenden Literaturstelle hervor:
https://en.wikipedia.org/wiki/Representational_state_transfer

Bei der Kommunikation zwischen einem Server der Frankiermaschinenherstellers und der Frankiermaschine kommt beispielsweise ein Übertragungsprotokoll aus einer Bibliothek von Funktionalitäten zum Einsatz. Eine Bibliothek trägt die Bezeichnung 'SignalR':
https://en.wikipedia.org/wiki/SignaIR

SignaIR ist eine Bibliothek, welche es ermöglicht, Webserver um eine Echtzeit-Funktionalität zu erweitern, indem es ihnen erlaubt Nachrichten an verbundene Clients zu pushen. Üblicherweise verwendet SignaIR hierzu WebSockets. Damit werden die serverseitigen Nachrichten über einen zusätzlich eröffneten Übertragungssteuerungsprotokoll-Kanal (Transmission Control Protocol = TCP) gesendet. Die Identifizierung der am Netzwerk teilnehmenden Rechner geschieht über IP-Adressen.

Alternativ zu SignaIR kann auch eine andere Websocket unterstützende Technologie eingesetzt werden. Ein Framework von Microsoft für Server, der über das World Wide Web kommuniziert, wird nachfolgend ASP (Application Service Provider) genannt. Eine neue Bibliothek für ASP.NET-Entwickler, die die Entwicklung von Webfunktionen in Echtzeit vereinfacht, wird ASP.NET SignaIR genannt. SignaIR ermöglicht bidirektionale Kommunikation zwischen Server und Client. Server können Inhalte jetzt sofort an verbundene Clients senden, sobald sie verfügbar sind. SignaIR unterstützt Web Sockets und greift auf andere kompatible Techniken für ältere Browser zurück. SignalR enthält APIs für die Verbindungsverwaltung (z. B. Ereignisse verbinden und trennen), Gruppierung von Verbindungen und Autorisation. Die API (Application Programming Interface) ist eine Anwendungsprogrammierschnittstelle, die von einem Softwaresystem anderen Programmen zur Anbindung an das System zur Verfügung gestellt wird.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigen:
- Fig. 1,: perspektivische Darstellung einer Gehäuseoberschale von vorn rechts oben,
- Fig. 2,: vereinfachtes Blockschaltbild einer Schaltungsanordnung zur akustischen Ausgabe nach einer Variante 1A eines Gutverarbeitungsgeräts,
- Fig. 3,: vereinfachtes Blockschaltbild einer Schaltungsanordnung zur akustischen Ein- und Ausgabe nach einer Variante 1B,
- Fig. 4,: vereinfachte Blockschaltbilder zur akustischen Ein- und Ausgabe für die Variante 1B und weitere Varianten 1C und 1D,
- Fig. 5,: vereinfachte Blockschaltbilder zur akustischen Ein- und Ausgabe für die Variante 1E und weitere Varianten 1F, 1G und 1H,
- Fig. 6,: Darstellung wichtiger Kommunikationsverbindungen in vereinfachter Form,
- Fig. 7,: Sequenzprotokoll für die Variante 1H.

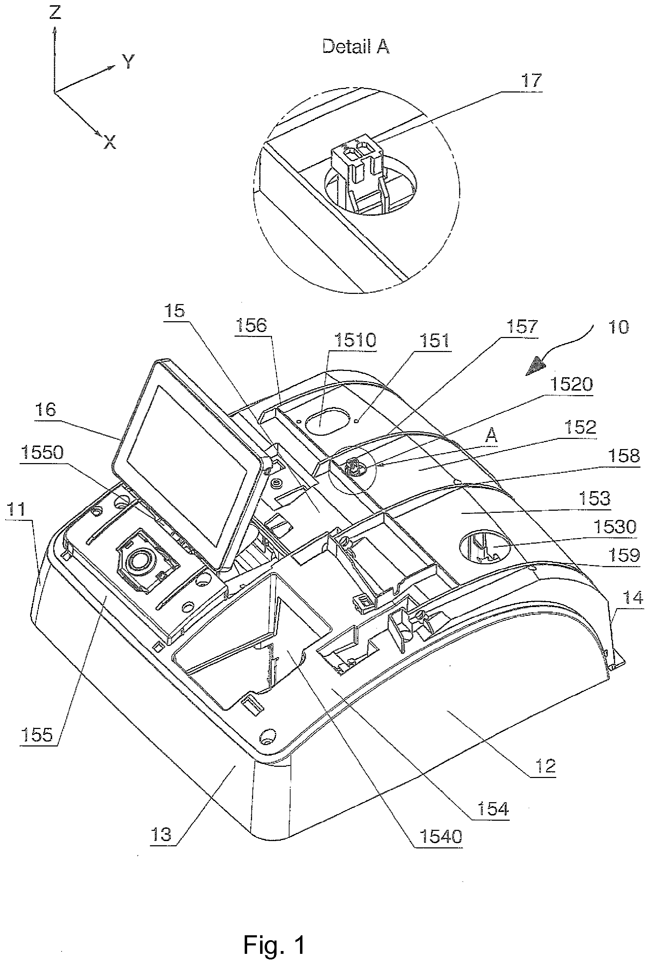

Die Fig. 1 zeigt eine perspektivische Darstellung einer Gehäuseoberschale einer Frankiermaschine von vorn rechts oben. Ein Druckträger, beispielsweise ein Poststück, kann durch die Frankiermaschine in Transportrichtung x transportiert werden. Zu dieser Transportrichtung x liegen die Richtungen y und z orthogonal gemäß einem kartesischen Koordinatensystems.

Die Gehäuseoberschale 10 weist links eine stromaufwärts liegende Seitenwand 11 und rechts eine stromabwärts liegende Seitenwand 12 sowie vorn eine Vorderwand 13 und hinten eine Rückwand 14 auf. Die Oberseite 15 der Gehäuseoberschale 10 ist gewölbt und weist Stützrippen 156, 157, 158 und 159 für eine - nicht dargestellte - Gehäuseblende in der hinteren Hälfte der Oberseite 15 auf. Die Oberseite 15 der Gehäuseoberschale 10 weist einen stromaufwärts liegenden ersten Abschnitt 151 zwischen den Stützrippen 156, 157 in der hinteren Hälfte der Gehäuseoberschale 10 auf. Im Zentrum des ersten Abschnitts 151 ist eine erste Öffnung 1510 für einen Lautsprecher ausgebildet, der auf der Unterseite der Gehäuseoberschale 10 montiert wird und dessen Membranabmessungen mit der ersten Öffnung 1510 fluchten. In einem zweiten Abschnitt 152 zwischen den Stützrippen 157, 158 in der hinteren Hälfte der Gehäuseoberschale 10 ist eine zweite Öffnung 1520 für eine Steckverbinderbuchse für ein Lautsprecherkabel zum elektrischen Anschluss des Lautsprechers an ein Mainboard der Frankiermaschine ausgebildet (Detail A), wobei der Anschluss nach einer Montage der Gehäuseoberschale 10 auf einer - nicht dargestellten - Gehäuseunterschale vorgenommen wird. In einem stromabwärts liegenden dritten Abschnitt 153 zwischen den Stützrippen 158, 159 in der hinteren Hälfte der Gehäuseoberschale 10 ist eine dritte Öffnung 1530 für eine Montage eines - nicht dargestellten - statischen Wiegeteller vorgesehen. Die vordere Hälfte der Oberseite 15 besteht aus einem stromabwärtig gelegenen annähernd quadratischen vierten Abschnitt 154 und einem stromaufwärtig gelegenen annähernd quadratischen fünften Abschnitt 155. Unter dem stromaufwärtig gelegenen annähernd quadratischen fünften Abschnitt 155 der Oberseite 15 ist ein Mittel 16 zur manuellen Eingabe und zur optischen Anzeige montiert, das Mittel 16 weist ein Touchscreen-Display auf, welches durch eine Öffnung 1550 in z-Richtung nach oben hindurch ragt. In dem stromabwärtig gelegenen ebenfalls annähernd quadratischen vierten Abschnitt 154 der Oberseite 15 ist eine weitere Öffnung 1540 für einen Tintenkartuschenwechsel vorgesehen. Die Gehäuseoberschale 10 und eine - nicht dargestellte - Gehäuseunterschale sind für das Gesamtvolumen ca. 20-30 Liter bestimmend, welches das Gehäuse einschließt, wobei eine Höhe des Gehäuses kleiner ist, als die übrigen Dimensionen und die übrigen Dimensionen des Gehäuses gleich groß realisiert werden. Obwohl auch Einbauten innerhalb des Gehäuses vorgesehen sind, kann das Volumen einer Kapsel, welche den Lautsprecher einkapselt und auf der Unterseite der Gehäuseoberschale montiert wird, groß genug realisiert werden, so dass ein akustischer Kurzschluss bei tiefen Tonfrequenzen vermieden und eine verständliche Sprachwiedergabe ermöglicht wird.

Alternativ ist eine Anordnung des gekapselten Lautsprechers an einer anderen geeigneten Stelle unter der Gehäuseoberschale möglich.

Anhand der Fig. 2 wird ein vereinfachtes Blockschaltbild einer Schaltungsanordnung zur akustischen Ausgabe nach einer Variante 1A erläutert. Ein Gutverarbeitungsgerät, beispielsweise eine Frankiermaschine des Typs PostBase®, umfasst Mittel 8 zur akustische Ausgabe akustischer Signale, wobei die Mittel 8 von einer Steuereinheit 7 angesteuert werden und mindestens einen Lautsprecher aufweisen. Außerdem kann die Steuereinheit 7 einen Anschluss 70 für das Touchscreen-Display 16 (Fig. 1) ansteuern.

Anhand der Fig. 3 wird ein vereinfachtes Blockschaltbild einer Schaltungsanordnung zur akustischen Ein- und Ausgabe nach einer Variante 1B erläutert. Ein Gutverarbeitungsgerät nach Variante 1B, beispielsweise eine Frankiermaschine des Typs PostBase®, umfasst ein Mittel 8 zur akustischen Ausgabe und ein Mittel zur akustischen Eingabe akustischer Signale. Die Mittel 8 und 9 werden von einer Steuereinheit 7 angesteuert und weisen mindestens einen Lautsprecher und ein Mikrofon auf. Ebenfalls kann die Steuereinheit 7 einen Anschluss 70 (Fig. 4) für das Touchscreen-Display 16 (Fig. 1) ansteuern. Über das Touchscreen-Display kann vorteilhaft auch die Lautstärke für die akustische Wiedergabe von Sprache und Tonsignalen eingestellt werden.

Die Fig. 4 zeigt vereinfachte Blockschaltbilder zur akustischen Ein- und Ausgabe für die Variante 1B und für weitere Varianten 1C und 1D.

Ein Gutverarbeitungsgerät nach der Variante 1B, beispielsweise eine Frankiermaschine des Typs PostBase®, umfasst Mittel 8 und 9 zur akustischen Aus- und Eingabe akustischer Signale. Die Mittel 8 und 9 weisen mindestens einen Lautsprecher und ein internes Mikrofon auf und werden von der Steuereinheit 7 angesteuert.

Ein Gutverarbeitungsgerät nach der Variante 1C, beispielsweise eine Frankiermaschine des Typs PostBase®, umfasst Mittel zur akustischen Eingabe, wie einen analogen Signalvorverstärker 79 für ein Mikrofon und einen A/D-Wandler 78 der mit der Steuereinheit 7 verbunden ist. Die Mittel werden von der Steuereinheit 7 angesteuert und weisen - in nicht gezeigter Weise - entweder einen Steckverbinder zum Anschluss eines externen Mikrofons 19 oder eines Headsets (nicht gezeigt) auf. Das Mainboard 1 hat einen Touchscreen-Display-Anschluss 70 und weist Mittel 8 zur akustischen Ausgabe, wie einen D-Verstärker für mindestens einen Lautsprecher auf. Das Mainboard 1 kann auch - in nicht gezeigter Weise - ein Mittel für eine drahtlose Kommunikation mit einem Headset aufweisen.

Die auf einem Mainboard 1 einer Frankiermaschine angeordnete Steuereinheit 7 umfasst die folgenden Mittel 71-75, ein Sicherheitsmodul 76 und eine erste Kommunikations-Schnittstelle 77 zur Kommunikationsverbindung via ein Mittel 4 mit einem entfernten Server 40 des Herstellers der Frankiermaschinen. Die erste Kommunikations-Schnittstelle 77 umfasst mindestens ein Kommunikationsmodul für drahtgebundene (LAN) und/oder nicht drahtgebundene Netzwerke (WLAN). Das Mittel 4 kann beispielsweise ein Local Area Network (LAN) sein. Das Mittel 4 umfasst einen Kommunikationskanal, welcher durch wechselnde Sitzungsschlüssel gesichert wird. Die Mittel 71-75 der Steuereinheit 7 umfassen in an sich bekannter Weise eine Central Processor Unit (CPU) 71, einen Programmspeicher (ROM) 72, einen Arbeitsspeicher (RAM) 73, eine Ein-/Ausgabe-Schaltung 74, beispielsweise Field Programmable Gate Array (FPGA) und ein nicht-flüchtiger Speicher (NVM) 75. Der entfernte Server 40 des Herstellers steht via Internet 50 in Kommunikationsverbindung mit den Cloud Services 60 der Dienstleisterfirmen A bis Z.

Eine CPU der Steuereinheit und ein Schaltverstärker, insbesondere ein Klasse-D-Verstärker, sind auf einem Mainboard 1 montiert. Der Schaltverstärker gehört zu den Mitteln 8 zu einer akustischen Ausgabe und ist für die Verstärkung von pulsweitenmodulierten Signalen am Ausgang der CPU der Steuereinheit vorgesehen. Die CPU nutzt eine Pulsweitenmodulation zur Erzeugung eines annähernd sinusförmigen Verlaufs des Kurzzeitmittelwertes der Spannung. Auf den Lautsprecher wirkt dieser Spannungsverlauf wie eine Sinusspannung. Die unterschiedlich langen Pulsen bei der Pulsweitenmodulation werden durch Treiber-Transistoren verstärkt und mit einer hohen Frequenz (90 - 100 kHz) ein- und ausgeschaltet. Dadurch wird ein hoher Wirkungsgrad von ca. 90% erreicht. Das geschaltete Ausgangssignal wird, bevor es zwecks Schallwandlung zum Lautsprecher weitergeleitet wird, noch mit einem - nicht gezeigten - Tiefpass gefiltert, um elektromagnetische Störungen aufgrund der HF-Schaltfrequenz zu unterdrücken, die andere Geräte beeinträchtigen könnten. Das Mainboard 1 erhält geeignete (nicht gezeigte) weitere Schnittstellen für die Mittel zur akustischen Ein- und Ausgabe (Mikrofon und Lautsprecher). Gemäß der Variante 1B ist eine Anordnung mindestens eines Mikrophons auf dem Mainboard 1 oder alternativ an einer geeigneten Stelle unter dem Gehäuse (z.B. an der Frontseite) vorgesehen. Allerdings müssen Maßnahmen zur aktiven und/oder passiven Schwingungsdämpfung getroffen werden, um den Einfluss des Körperschalls auf die Sprachanalyse weitgehend zu unterdrücken.

Ein externes Mikrofon 19 ist gemäß der Varianten 1C und 1D vorgesehen, um den Einfluss von Körperschall nahezu vollständig ausschließen zu können. Eine Frankiermaschine nach der Variante 1C geht von einem Mikrofon aus, welches in ein externes Gerät 30 integriert ist, beispielsweise ein Mobiltelefon, dass über ein Übertragungsmittel, beispielsweise Global System for Mobile Communications (GSM) oder Universal Mobile Telecommunications System (UMTS) oder Long Term Evolution (LTE) u.a. als eine dritte Kommunikationsverbindung 5, mit einem Mobilfunkbetreiber in eine kommunikative Verbindung treten kann.

Der Mobilfunkbetreiber steht via ein Netz, beispielsweise Glasfasernetz u.a., als eine vierte Kommunikationsverbindung 6, und via Internet 50 mit einem Cloud Services 60 einer der Dienstleisterfirmen A bis Z in einer kommunikativen Verbindung.

Die Fig. 5 zeigt vereinfachte Blockschaltbilder zur akustischen Ein- und Ausgabe für die Variante 1E und weitere Varianten 1F, 1G und 1H.

Ein Gutverarbeitungsgerät nach der Variante 1E, beispielsweise eine Frankiermaschine des Typs PostBase®, umfasst Mittel 8* und 9* zur akustischen Aus- und Eingabe akustischer Signale, die - wie in Fig. 3 gezeigt - ebenfalls von einer Steuereinheit angesteuert werden und mindestens einen Lautsprecher und ein internes Mikrofon aufweisen. Das Internet 50* steht über eine fünfte Kommunikationsverbindung 6a* mit einem entfernten Server 40* des Herstellers der Gutverarbeitungsgerät, insbesondere Frankiermaschinen in kommunikativer Verbindung. Die Steuereinheit des Gutverarbeitungsgeräts nach der Variante 1E ist auf einem Mainboard 1* angeordnet und steht über eine sechste Kommunikationsverbindung 6e* mit dem Internet 50* in kommunikativer Verbindung. Einerseits kommunizieren der Server 40* und die Steuereinheit 1* des Gutverarbeitungsgeräts über das Internet 50* miteinander. Andererseits kommunizieren der Server 40* des Herstellers und die Cloud Services 60* über das Internet 50* miteinander.

Eine auf einem Mainboard 1* des Gutverarbeitungsgeräts nach der Variante 1F angeordnete Steuereinheit hat eine erste Kommunikations-Schnittstelle 77* und steht über eine siebente Kommunikationsverbindung 6f* mit dem Internet 50* in kommunikativer Verbindung. Der entfernte Server 40* des Herstellers steht über die fünfte Kommunikationsverbindung 6a* mit dem Internet 50* in Kommunikationsverbindung, um einerseits mit der Steuereinheit des Gutverarbeitungsgeräts nach der Variante 1F und andererseits mit einem Cloud Services 60* der Dienstleisterfirmen A bis Z zu kommunizieren. Das Gutverarbeitungsgerät nach der Variante 1F, umfasst Mittel zur akustischen Eingabe, wie einen analogen Signalvorverstärker 79* für ein externes Mikrofon 19* und einen A/D-Wandler 78*, der mit der Steuereinheit 7* verbunden ist. Statt dem Mikrofon 19* kann alternativ ein Headset oder eine andere geeignete Sprechgarnitur über eine Anschlussbuchse (USB-Buchse) oder kabellos via Bluetooth, WLAN oder DECT - in nicht gezeigter Weise - angeschlossen werden. Der Universal Serial Bus (USB) ist eine serielle Schnittstelle zum Mainboard 1* die digitale und analoge Audiosignale übertragen kann und von der Steuereinheit 7* angesteuert wird. Die Steuereinheit 7* hat einen Touchscreen-Display-Anschluss 70* und Mittel 8* zur akustischen Ausgabe, wie einen D-Verstärker für mindestens einen Lautsprecher. Zur drahtlosen Datenübertragung via Bluetooth, WLAN oder DECT zu einem kabellosen Headset sind geeignete Mittel auf dem Mainboard 1* vorgesehen. Die Steuereinheit 7* umfasst die folgenden Mittel 71*-75*, ein Sicherheitsmodul 76* und eine erste Kommunikations-Schnittstelle 77* zur kommunikativen Verbindung 6e* via Internet 50* mit einem entfernten externen Server 40* des Herstellers der Gutverarbeitungsgeräte. Die Mittel 71*-75* der Steuereinheit 7* umfassen in an sich bekannter Weise eine Central Processor Unit (CPU) 71*, einen Programmspeicher (ROM) 72*, einen Arbeitsspeicher (RAM) 73*, eine Ein-/Ausgabe-Schaltung 74*, beispielsweise Field Programmable Gate Array (FPGA) und einen nicht-flüchtigen Speicher (NVM) 75*.

Ein Gutverarbeitungsgerät nach der Variante 1F (Fig. 5) unterscheidet sich von einem Gutverarbeitungsgerät nach der Variante 1C (Fig. 4) mit LAN dadurch, dass es über eine siebente Kommunikationsverbindung 6f* mit dem Internet 50* in kommunikativer Verbindung steht.

Ein Gutverarbeitungsgerät nach der Variante 1G (Fig. 5) unterscheidet sich von einem Gutverarbeitungsgerät nach der Variante 1D (Fig. 4) dadurch, dass der PC mit einer Software "FP-Navigator" über die erste Kommunikationsverbindung 4* mit dem Internet 50* in kommunikativer Verbindung steht. Der Client (in diesem Fall der FP Navigator) überprüft das TLS Zertifikat des Servers (Server des Frankiermaschinenherstellers) und stellt damit sicher, dass es sich tatsächlich um den richtigen Server handelt. Die Software "FP-Navigator" ermöglicht es, die Frankiermaschine direkt vom PC-Bildschirm aus zu bedienen. Die Sprachassistentin Siri bereichert unseren Alltag schon deutlich länger als ihre Konkurrentinnen von Amazon, Google und Co. Die Anweisungen, die in den übermittelten Audiodateien enthaltenen Antworten können auf Plausibilität überprüft werden, was voraussetzt, dass im entfernten Server des Herstellers des Gutverarbeitungsgeräts, insbesondere des Frankiermaschinenherstellers, entsprechende Algorithmen implementiert sind und die von Siri übermittelten Audiodateien direkt zum entfernten Server des Herstellers übermittelt werden. Alternativ kann eine Plausibilitätsprüfung auch von einer im PC 2* installierten Software durchgeführt werden.

Ein Gutverarbeitungsgerät nach der Variante 1H (Fig. 5) unterscheidet sich von einem Gutverarbeitungsgerät nach der Variante 1G (Fig. 4) dadurch, dass beide der PC und das Gutverarbeitungsgerät jeweils separat an das Internet angeschlossen sind. Der PC 2* weist eine zweite Schnittstelle und eine achte Kommunikationsverbindung 6g* via Internet 50* mit dem entfernten Server 40* auf. Das Gutverarbeitungsgerät ist vorzugsweise eine Frankiermaschine mit entsprechender Hard- und Software, welche auf einem Mainboard 1* realisiert sind. Auf dem Mainboard ist ein internes AVS-Gerät 30a* mit einem Lautsprecher 38a* und einem Mikrofon 39a* montiert. Ein zugehöriger AVS-Software-Modul ist ebenfalls installiert. Der Alexa-Voice-Service (AVS) schickt die Sprach-Antworten (Response) grundsätzlich nur an die Quelle der Request-Nachricht (also das Gerät, welches das AVS Interface implementiert, beispielsweise der smarte Lautsprecher von Amazon des Typs Echo. Damit eine Frankiermaschine ohne Sprachassistent dennoch Sprachdateien akustisch wiedergeben kann, ist ein internes AVS-Gerät auf dem Mainboard 1* montiert. Zwischen dem Mainboard 1* und einem Cloud Servis A wird eine neunte Kommunikationsverbindung 6h* via Internet 50* erforderlich. Zwischen dem PC 2* und der Frankiermaschine besteht weiterhin eine zweite Kommunikationsverbindung 3*.

Im Gutverarbeitungsgerät, insbesondere eine Frankiermaschine, nach der Variante 1E (Fig. 5) ist keine Kommunikationsverbindung mit einem PC vorgesehen. Dennoch kann die Frankiermaschine beispielsweise eine AVS-Funktionalität (unter anderem inclusive der Audio Ein- und Ausgabe) im Programmcode der Frankiermaschine aufweisen, während nach der Variante 1H (Fig. 5) die AVS-Funktionalität in einem zusätzlich im Gehäuse verbauten internen AVS-Gerät implementiert werden muss. Dieses Gerät muss im Falle der Sprachassistentin Alexa über die erste Schnittstelle zwangsweise sowohl den Request an den Alexa Service schicken, als auch die entsprechende Response entgegennehmen. Nachdem die Response entgegengenommen worden ist, kann in einer weiteren - nicht dargestellten Variante - die in der Response enthaltenen Audio-Daten beispielsweise per Bluetooth an ein entsprechendes Headset zu schicken (und auch den Input des Mikrophons als Grundlage für den Request zu nutzen), oder alternativ direkt mit einem Lautsprecher am Gerät auszugeben.

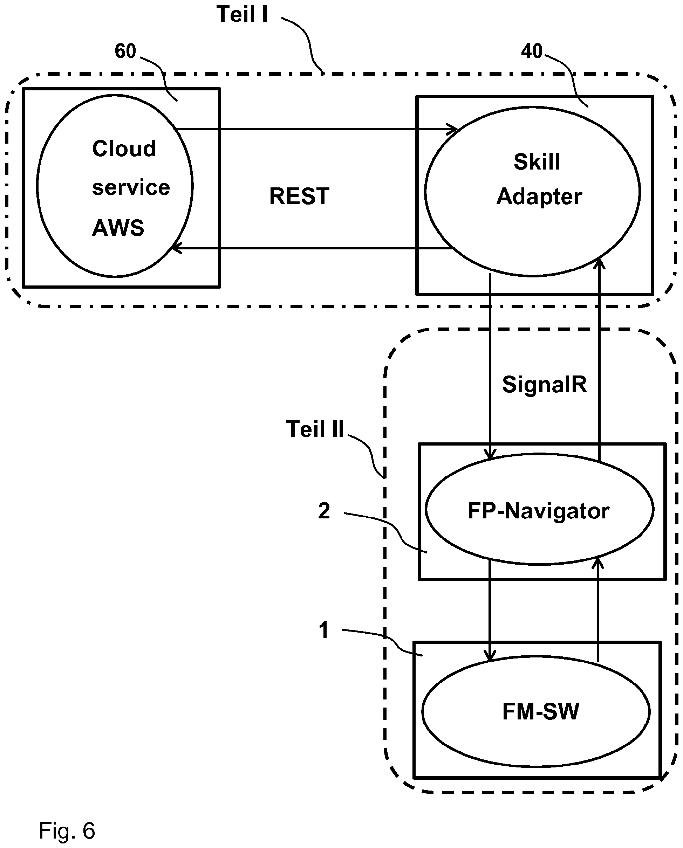

In Fig. 6 sind die für die Implementierung des Skills wichtigen Kommunikationsverbindungen in vereinfachter Form dargestellt. Ein erster Teil einer Kommunikation findet zwischen dem Server 60 eines Cloud Services und dem Server 40 eines Herstellers der Frankiermaschinen statt. Ein zweiter Teil der Kommunikation findet zwischen dem Server 40 des Herstellers und einem Personal Computer 2 eines Anwenders statt, der mit einer Frankiermaschine 1 in kommunikativer Verbindung steht.

Der Server 60 eines Cloud Services des US-amerikanischer Cloud-Computing-Anbieters AWS (Amazon Web Services), einem Tochterunternehmen des Online-Versandhändlers Amazon, bietet seit dem Jahre 2006 zahlreiche Dienste an. Ein Cloud Services "Alexa" wird beispielsweise von der Dienstleisterfirma Alexa bereitgestellt. Eine Implementierung der Alexa Anbindung lässt sich in einen ersten Teil und zweiten Teil unterteilen. In dem ersten Teil der Kommunikation zwischen dem Server des Cloud-Services 60 und dem Server 40 des Frankiermaschinenherstellers wird die von Amazon definierte REST-Schnittstelle verwendet. Im zweiten Teil der Kommunikation zwischen einem Skill-Adapter im Server 40 des Herstellers und der PC-Software eines Personal Computers 2 eines Anwenders werden mithilfe von WebSockets Anweisungen via Push-Verfahren vom Server 40 an die PC-Software geschickt. Die PC-Software wird nachfolgend FP Navigator genannt und ist für Frankiermaschinen vorgesehen.

Eine Bibliothek "SignalR", welches auf WebSockets basiert, bildet eine Schnittstelle zwischen beiden Teilen. Der erste Teil umfasst den Cloud Services "Alexa", einen Architekturstil Representational State Transfer (REST), einen Skill Adapter und die Bibliothek "SignalR".

Die Sprachsteuerung der Frankiermaschine mittels Amazon Alexa ist als sogenannter Skill umgesetzt. Ein Skill ist aus Sicht des Nutzers mit einer Smartphone-App vergleichbar. Im Unterschied zur App wird der Skill jedoch nicht auf dem Gerät des Endnutzers installiert, sondern lediglich seinem (virtuellen) Nutzer-Account hinzugefügt und damit bei der Interpretation seiner Spracheingaben berücksichtigt. Amazon ermöglicht eine Reihe von unterschiedlichen Skill-Typen, welche hervorgehen aus:
https://developer.amazon.com/docs/ask-overviews/understanding-the-different-types-of-skills.html

Die Arten des Skills sind:
- Custom Skills
- Smart Home Skills
- Flash Briefing Skills
- Video Skills
- List Skills

Für die Umsetzung der Sprachsteuerung bietet nur der *Custom Skill* die nötige Flexibilität. Aus Entwicklersicht besteht ein *Custom* Skill grundsätzlich aus den folgenden Komponenten:
- Intents
- Sample Utterances
- Skill adapter

Die vorgenannten Komponenten gehen zumindest teilweise hervor aus:
https://developer.amazon.com/docs/custom-skills/understanding-custom-skills.html#components-of-a-custom-skill

Die Intents sind Formen von Anweisungen des Skills. Sie gehen aus der Tabelle 1 hervor:

**Tabelle 1:**

| | |
|---|---|
| *PingDevice* | Testen der Verbindung vom Skill-Adapter zum FP Navigator |
| *ConnectToDevice* | Herstellen einer logischen Verbindung zwischen FP Navigator und der Frankiermaschine |
| *DisconnectFromDevice* | Beenden der bestehenden Verbindung zwischen Navigator-Software und Frankiermaschine |
| *ImprintLabels* | Bedrucken eines oder mehrerer in die Frankiermaschine eingelegten Labels mit einem Frankieraufdruck |
| *ImprintLetters* | Bedrucken eines oder mehrerer in die Frankiermaschine oder einer angeschlossenen automatischen ZuführVorrichtung eingelegten Briefumschläge |
| *CancelPrintinglnProgress* | Abbrechen eines laufenden Druckprozesses |
| *SetWeight* | Einstellen des Brief-Gewichts für das die folgenden Labels bedruckt werden sollen |
| *SelectAdvertisementlmage* | Auswählen des zu verwendendes Werbe-Klischee |
| *SelectAdvertisementText* | Auswählen des zu verwendenden Werbe-Textes |
| *RemoveAdvertisement* | Abwählen der aktuell eingestellten Werbung |
| *SelectCostAccount* | Auswahl der zu verwendenden Kostenstelle |
| *SelectShortcut* | Auswahl eines zuvor erstellten Druck-Profils |
| *SetDeviceMode* | Ändern des Betriebsmodus der Frankiermaschine. Zur Auswahl stehen Default, SealOnly, FeedOnly, PrintNumbers und AdvertTextOnly. |
| *ChargeCredit* | Aufladen des aktuell auf der Maschine verfügbaren Guthabens |
| *DisplayLastBookings* | Anzeigen der letzten Buchungen, optional gefiltert nach bestimmten Kriterien (die letzten n Buchungen oder alle Buchungen aus dem angegebenen Zeitintervall) |
| *PrintDeutschePostEinlieferungsliste* | Drucke die Einlieferungsliste der Deutschen Post |
| *PrintPackingList* | Drucken der Versandliste |

Als *Sample Utterances* bezeichnet man Beispiel-Äußerungen, inklusive Information auf welche Intents diese gemappt und wie zugehörige Slots befüllt werden sollen. Hier einige *Beispiele:*
*"Zeige mir alle Buchungen zwischen dem {FirstIncludedDate} und dem {LastIncludedDate}"*
resultiert in einem IntentRequest mit dem Intent "DisplayLastBookings" mit den Parametern "FirstIncludedDate" sowie "LastIncludedDate", jeweils vom Datentyp AMAZON.DATE
*"Zeige mit die letzten {NumberOfBookingsToDisplay} Buchungen an"*
hingegen führt zu einem Intent vom Typ "DisplayLastBookings" mit dem Parameter "NumberOfBookingsToDisplay" vom Datentyp AMAZON.NUMBER
*"Bedrucke alle Umschläge in der automatischen Zuführung"*
führt zu einem parameterlosen Intent vom Typ "ImprintLetters"
*"Wähle Werbung {AdvertisementNumber} auf der {AdvertisementPosition} Seite"* führt zu dem Intent "SelectAdvertisementImage" mit dem Parameter "AdvertisementNumber" vom Typ AMAZON.NUMBER und dem Parameter "Advertisement-Position" vom Custom-Type Advertisement-Position. Der *Skill-Adapter* ist eine Schnittstelle zwischen den Amazon-Diensten und den Frankiermaschinen von FP.

Der Skill-Adapter läuft auf dem Server 40 bzw. 40* und hat im Wesentlichen folgende Aufgaben:
- Annahme von Verbindungsanfragen von FP-Navigator Instanzen oder Frankiermaschinen-Instanzen und Aufbau einer bidirektionalen TCP Verbindung mittels SignalR und WebSockets. Das Transmission Control Protocol (TCP) ist ein Übertragungssteuerungsprotokoll der bidirektionalen Verbindung.
- Bereitstellung einer REST-Schnittstelle, die der Alexa Service API genügt. Der Endpoint nimmt Requests per http POST entgegen und Überprüft anhand der mit gelieferten Informationen, ob der Absender berechtigt ist diesen zu nutzen. Berechtigt ist nur der Alexa-Service für den/die zugehörigen Skill(s).
- Mapping der Inhalte des Alexa-Requests auf entsprechende Geräte-Funktionen, inklusive zugehöriger Parameter.
- Weiterleiten der ermittelten Anweisungen an die entsprechende, über eine bidirektionale Verbindung erreichbare, FP-Navigator Instanz per Push-Verfahren. Hierdurch können Anweisungen sofort - also ohne Verzögerung - an die Geräte weitergegeben werden und sind nicht darauf angewiesen, dass diese in bestimmten Intervallen selbstständig abgefragt werden.
- Bereitstellung eines Rückkanals für Statusnachrichten über Erfolg oder aufgetretene Fehler (beispielsweise, dass eine Anweisung erfolgreich an die Frankiermaschine weitergegeben konnte, oder dass die Frankiermaschine nicht über ausreichend Guthaben zum Bedrucken der Briefe verfügt).
- Mapping der aufgetretenen Statusmeldungen auf die passende, natürlich sprachliche Rückmeldung, abhängig von der im Request angegebenen Sprache des Nutzers.
- Erzeugung einer passenden Response-Nachricht, inklusive des, anhand der Rückmeldung des FP Navigators erzeugten, natürlich-sprachlichen Antwort-Textes (das Format dieser Antwort muss selbstverständlich ebenfalls der Amazon-API genügen).

Ein Uniform Resource Locator (URL) ist ein einheitlicher Ressourcenzeiger, der eine Ressource identifiziert und lokalisiert, beispielsweise eine Website über die zu verwendende Zugriffsmethode (zum Beispiel das verwendete Netzwerkprotokoll wie HTTP) und den Ort (*location*) der Ressource in Computernetzwerken.

Ein URL des Skill-Adapters ist bei Amazon in der Skill-Konfiguration (über ein Web-Interface) als *"Service Endpoint"* des Skills hinterlegt. Hierdurch werden sämtliche zu diesem Skill gehörigen Requests (LaunchRequests, IntentRequests und SessionEndedRequests) an diesen Server geschickt. Die Aufgabe des Skill-Adapters ist es nun diesen Alexa-Request auszulesen, auf die jeweilige tatsächlich von der Frankiermaschine auszuführenden Befehl abzubilden und an die passende Navigator-Instanz weiterzuleiten. Abhängig vom Ergebnis antwortet die Navigator-Software mit einer passenden Statusmeldung, also beispielsweise "WeightSet" oder "NotEnoughCredit", woraufhin der Skill-Adapter einen passenden Antworttext auswählt und diesen neben anderen Informationen als Skill-Response - ebenfalls über eine REST-Schnittstelle - an die Alexa Cloud schickt. Aus diesem Antwort-Text wird dann ein Audio-Datei generiert und, nachdem es an das entsprechende AVS-Gerät (beispielsweise Amazon Echo) geschickt wurde, abgespielt. Das Format der Skill-Requests und -Responses ist von Amazon im *Service Interface* definiert.

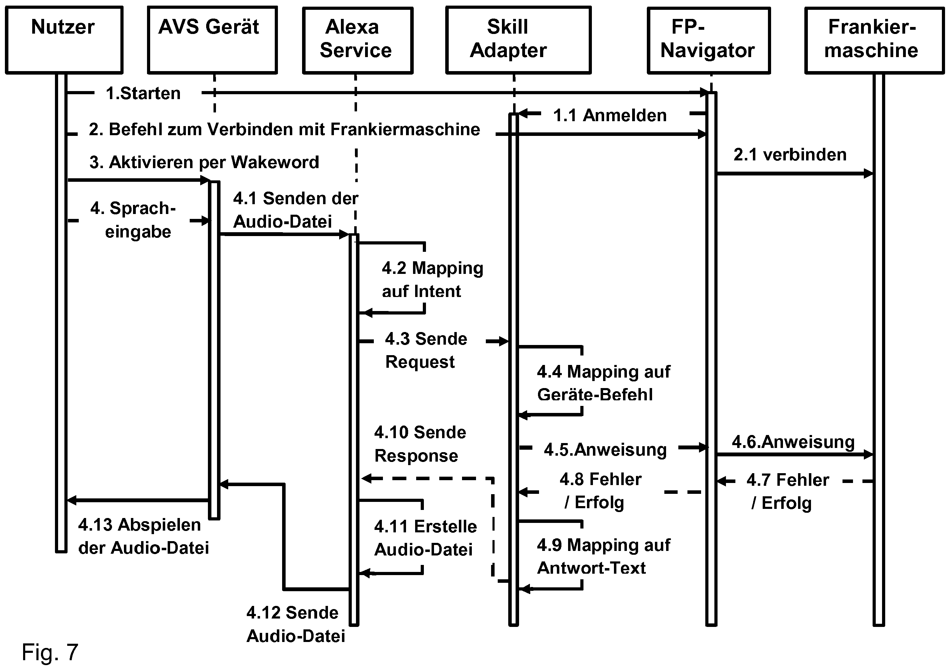

Somit ergibt sich ein allgemeiner Ablauf gemäß den Schritten des in der Fig.7 dargestellten Sequenzprotokolls:
1. Starten des FP-Navigators,
   1.1 Anmelden mittels FP-Navigator beim Skill Adapter,
2. Befehl des Nutzers zum Verbinden des FP-Navigators mit der Frankiermaschine. Der Nutzer interagiert via FP-Navigator oder alternativ direkt - nicht gezeigter Weise - mit der Frankiermaschine.
   2.1 Verbinden des FP-Navigators mit der Frankiermaschine,
3. Aktivieren des AVS Geräts per Wakeword. Ein Gerät, das die AVS Spezifikation erfüllt (beispielsweise ein Mobiltelefon oder ein Gerät der Amazon Echo Reihe) wird aktiviert, um eine Spracheingabe zu ermöglichen. Im Falle von Amazon Alexa geschieht dies durch die Benutzung eines sogenannten Wakewords "Alexa". Alternativ kann - nicht gezeigter Weise - auch die mit akustischen Ein- und Ausgabemitteln ausgestattete Frankiermaschine ein AVS Gerät sein.
4. Der Nutzer beginnt mit der Spracheingabe des Befehls. Die Grundstruktur des Befehls (zur Delegation des eigentlichen, enthaltenen Befehls an die Zerlegung nach einem durch den Skill-Entwickler definierten Schema) folgt einem von Amazon vorgegebenen Muster. Beispielsweise kann dies durch das anhängen von "an [Name des Skills]" geschehen. Ein vollständiger Befehl könnte dann wie folgt lauten: "Drucke zehn Briefe, an Post-Base".
   4.1. Die Audio-Aufnahme dieses Befehls wird in einer Audio-Datei gespeichert und durch das AVS Gerät zu weiteren Verarbeitung an den Alexa Service geschickt. Dieser Service kann (nach einer Transkription der Audio-Datei in einen Text) anhand der Struktur des Befehls - also beispielsweise anhand der Endung "an Post-Base" - erkennen, dass dieser Befehl für den (zuvor vom Nutzer seinem Profil hinzugefügten) Custom-Skill "PostBase" gedacht ist. Der Dienst wird den restlichen Befehl nun anhand der zu diesem Skill hinterlegten *Sample Utterances* zerlegen.
   4.2. Bei einem Mapping auf Intent, wird der Befehl und auf den jeweils passenden Intent, sowie dessen Parameter abgebildet. Der Text aus dem Beispiel, "Drucke zehn Briefe", würde also auf den Intent "ImprintLetters" mit dem Parameter "NumberOfLettersToImprint" von "10" abgebildet. Die Information über den ermittelten Intent wird mit anderen Informationen, wie der ID des Skills und Informationen über den Nutzer, die Session, etc. zu einem Request im JSON Format kombiniert.
   4.3. Ein Request wird an den Skill-Adapter gesendet. Die Information wird beispielsweise im Body eines http POST Requests per transportverschlüsseltem https an die (ebenfalls in der Konfiguration des Skills hinterlegten) Adresse des Skill-Adapters geschickt.
   4.4. Mapping auf den Geräte-Befehl. Die von Amazon Alexa Service verschickten Requests können von dem Skill-Adapter verarbeitet werden, da der Skill-Adapter die API-Spezifikation erfüllt. Zunächst wird anhand der Application-ID überprüft, ob die Quelle der Nachricht tatsächlich dem Sprach-Dienst entspricht und auch zu einem berechtigten Skill gehört. Ist die Überprüfung erfolgreich, wird der Intent, inklusive zugehöriger Parameter, aus der Nachricht extrahiert und auf den passenden Geräte-Befehl abgebildet.
   4.5. Der Internet, inklusive zugehöriger Parameter werden an den - zum Nutzer gehörenden -FP Navigator geschickt. Im Beispiel wird der PC-Software also die Anweisung übergeben 10 Briefe zu bedrucken. Als Übertragungskanal kommt die zuvor geschaffene bidirektionale TCP Verbindung (per SignaIR eröffnet) zu Einsatz.
   4.6. Eine Anweisung wird nun vom FP-Navigator zu der Frankiermaschine übermitteln. Dies kann entweder erfolgreich verlaufen, oder es tritt ein spezifischer Fehler auf.
   4.7. Dieser Erfolg oder Fehler (Misserfolg) wird von der Frankiermaschine an den FP-Navigator übermittelt.
   4.8. Dieser Erfolg oder Fehler (Misserfolg) wird dann als Statuscode per TCP an den Skill-Adapter übermittelt.
   4.9. Mapping auf Antwort-Text. Der Skill-Adapter wartet eine feste Zeit auf eine Rückantwort des FP-Navigators. Kommt innerhalb dieser Zeit keine Antwort, wird angenommen, dass die Verbindung unterbrochen wurde und ein entsprechender Fehler festgestellt. Ansonsten wird der Erfolg der Aktion anhand der Rückantwort des FP-Navigators ermittelt. In jedem Fall wird daraufhin eine passende Response-Nachricht für den Alexa-Service erzeugt. Ein Text wird anhand der Erfolgs- oder Fehlermeldung ausgewählt.
   4.10. Sende Response.
   4.11. Der Alexa Service synthetisiert aus dem mitgelieferten Antworttext eine entsprechende Audio-Datei.
   4.12. Die Antwort und Audio-Datei wird dann an das AVS-Gerät als http Response übermittelt.
   4.13. Die Frankiermaschine hat ein internes AVS-Gerät, welches die Audio-Datei abspielt und die Nachricht an den Nutzer akustisch ausgibt.

Mit dem Alexa Voice Service (AVS) können Entwickler vernetzte Produkte mit einer intelligenten Sprachsteuerung ausstatten. Der AVS ist modular aufgebaut und abstrahiert und bietet Komponenten für die Verarbeitung diskreter Funktionen wie Sprachaufnahme, Audioverarbeitung und Kommunikation, wobei jede Komponente mindestens ein Application Programming Interface (API) bereitstellt, die für jede Integration verwendet und angepasst werden können.

Der zweite Teil II, der Kommunikation (Fig. 6), umfasst die Bibliothek "SignalR" und API der Frankiermaschine. Die API ist ein Teil der Software "FP Navigator" der auf dem Personal Computer (PC) 2 läuft. Es wurde ein SignaIR Client im "FP-Navigator" implementiert, welcher sich mit oder ohne Authentifizierung mit dem SignaIR Server des ersten Teils verbindet. Das Anmelden passiert vorzugsweise automatisch beim Starten des FP-Navigators. Der Client empfängt auf der Schnittstelle Nachrichten. Im nachfolgenden Beispiel werden 17 implementierte Nachrichtentypen erläutert. Nach dem Erhalt einer Nachricht führt der Client einige Standardfunktionen aus. Dabei wird geprüft, ob aktuell Sprachbefehle entgegen genommen werden dürfen und es wird dem Nutzer mitgeteilt, wenn ein Sprachbefehl über SignaIR eingeht. Der Nutzer sieht auf dem Bildschirm beispielsweis dann ein Icon aufblinken.

Je nach Nachrichtentypen werden unterschiedliche Funktionen im FP-Navigator aufgerufen, welche sonst durch Nutzereingaben am Bildschirm aktiviert werden würden. Diese im FP-Navigator bereits implementierten Funktionen ermöglichen zudem die Kommunikation mit der Frankiermaschine. Einfache Nachrichten ermöglichen zum Beispiel den Verbindungsaufbau zur Frankiermaschine. Auch das Trennen der Verbindung zwischen der Frankiermaschine und dem FP-Navigator ist mit einem Befehl möglich. Die Nachrichten zum Auswählen von Kurzwahlen/ Hotkeys oder Kostenstellen enthalten jeweils einen Identifikator (ID).

Ein Identifikator ist ein mit einer bestimmten Identität verknüpftes Merkmal zur eindeutigen Identifizierung des Objekts. Beispielsweise gibt eine ID den Index der Kurzwahl, eine Kostenstelle, oder einen Namen an, zu welchem dann eine passende Kurzwahl bzw. Kostenstelle gesucht wird. Da kleinere Fehler in der Spracherkennung oder im Namen auftreten können wird die Levenshtein Distanz genutzt, um eine Kurzwahl oder Kostenstelle mit einem Namen zu finden, der möglichst nah am erkannten Wort liegt. Die Levenshtein-Distanz (auch Editierdistanz) zwischen zwei Zeichenketten ist die minimale Anzahl von Einfüge-, Lösch- und Ersetz-Operationen, um die erste Zeichenkette in die zweite umzuwandeln.

Das Setzen von Werbebildern und Werbetexten benötigt eine ID/Index und eine Position zum Setzen. Diese Position ist maschinenabhängig. Die Standard Position ist links. Wenn die rechte Position angegeben wurde und die Position verfügbar ist, wird das Werbebild bzw. der Werbetext rechts gesetzt.

Beim Entfernen von Werbebildern und Werbetexten wird nur die Position angegeben. Dann wird wieder standardmäßig an der linken Position entfernt. Wenn die rechte Position gegeben und verfügbar ist wird rechts entfernt.

Das Einstellen von Gewichten (Gewicht des Briefes ohne wiegen) ist sowohl mit metrischen, als auch imperialen Gewichtseinheiten möglich. Die Umrechnungen von "1500 Gramm" zu "1 Kilogramm 500 Gramm" erfolgen automatisch.

Auch das Nachladen von Geld in die Frankiermaschine ist möglich. Hierbei wird ein standardmäßiges Guthaben-Nachladen (PVD) in die Frankiermaschine ausgeführt. Der Nutzer muss die Eingabe am Bildschirm des Computers, ohne Sprachsteuerung, bestätigten. Die Frankiermaschine hat diverse Verhaltensmodi implementiert, welche nun via "Alexa" ausgewählt werden können. Zu diesen Modi gehören zum einen der Standardmodus, in welchem sich die Maschine normalerweise befindet, ein Zählmodus, in welchem die Briefe zum Drucken nummeriert werden, ein Transportmodus, ich welchem Briefe nur gezählt werden, ohne dass ein Drucken ausgelöst wird, einen Verschlussmodus, in welchem Briefe nur verschlossen werden und einen Werbemodus, ein welchem nur Werbebilder bzw. Werbetexte auf die Briefe gedruckt werden. Zum Verschließen der Briefe ist ein separates Modul erforderlich, welches beispielsweise Bestandteil einer automatischen Zuführstation (Feeder) ist, die im Transportweg vor der Frankiermaschine angeordnet ist. Die Frankiermaschine weist ein Magazin mit Frankierstreifen (Label) auf. Das Bedrucken der vom Feeder ausgegebenen Poststücke oder der aus dem Magazin ausgegebenen Labels ist auch steuerbar. Bei Start des Druckens wird angegeben, von welcher Quelle (Feeder oder Magazin) die zu bedruckenden Poststücke bezogen werden sollen. Zudem ist eine Angabe der Menge möglich (1 bis "alle"). Mit einem weiteren Befehl kann das Drucken abgebrochen werden. Es ist unerheblich, ob Briefe oder Labels bedruckt werden. Ein anderer Befehl erlaubt unter Angabe eines optionalen Startdatums, eines optionalen Enddatums, einer Maximalmenge und einer Kostenstelle das Anzeigen von Abbuchungen im FP-Navigator. Eine Anzeige erfolgt auf dem Bildschirm des PCs ohne Alexa.

Die Bidirektionalität des "SignalR" erlaubt zudem eine Antwort an den Server. Dabei wird der Nutzer darüber informiert, ob der Sprachbefehl ausgeführt wurde. Zudem kann ein Nutzer aus der Antwort schließen, ob der korrekte Befehl erkannt wurde. Daher werden nach der Ausführung von empfangenen Befehlen Rückmeldungen in Form von Statuscodes an den Server geschickt. Beispielsweise sind folgende Rückmeldungen implementiert:
0: "Allgemeiner Erfolg"
1: "Erfolgreicher Verbindungsaufbau" (zur Frankiermaschine)
2: "Erfolgreicher Verbindungsabbruch" (zur Frankiermaschine)
3: "Kurzwahl erfolgreich gewählt" (Produkt-Kurzwahl verfügbar und gesetzt) 4: "Kostenstelle erfolgreich gewählt" (Kostenstelle verfügbar und gesetzt)
5: "Werbebild erfolgreich gesetzt" (Werbebild verfügbar und an der gewünschten Position gesetzt)
6: "Werbetext erfolgreich gesetzt" (Werbetext verfügbar und an der gewünschten Position gesetzt)
7: "Werbung erfolgreich entfernt" (Werbebild oder Werbetext an der gewünschten Position entfernt)
8: "Gewicht erfolgreich gesetzt" (Gewicht für das Produkt wurde eingestellt) 9: "Geld erfolgreich geladen" (Es wurde erfolgreich Geld auf die Frankiermaschine geladen)
10: "Brief Bedruckung erfolgreich gestartet" (Es werden nun Briefe vom Vorrat bedruckt)
11: "Label Bedruckung erfolgreich gestartet" (Es werden nun Label vom Vorrat bedruckt)
12: "Drucken erfolgreich abgebrochen" (Jegliche Druckvorgänge wurden abgebrochen)
13: "Geräte Modus erfolgreich gesetzt" (Die Frankiermaschine arbeitet jetzt in einen anderen Modus)
14: "Abbuchungen erfolgreich angezeigt" (Gewünschte Liste wird angezeigt)
15: "Pingantwort" (Antwort auf einen Ping von Alexa um Verbindung zu testen)
100: "Allgemeiner Fehler"
101: "Verbindungsfehler" (zur Frankiermaschine)
102: "Kurzwahl nicht gefunden" (Kurzwahl mit gewünschtem Namen oder Index wurde nicht gefunden)
102: "Kostenstelle nicht gefunden" (Kostenstelle mit gewünschtem Namen oder Index nicht gefunden)
103: "zu wenig Geld" (das geladene Geld reicht nicht zum Drucken aus)
104: "zu wenig Geld - Druck abgebrochen" (zu wenig Geld um den Druck fortzusetzen)
105: "Werbebild nicht gefunden" (Werbebild mit gewünschtem Index nicht gefunden)
106: "Werbetext nicht gefunden" (Werbetext mit gewünschtem Index nicht gefunden)
107: "Sprachaktivierung temporär deaktiviert" (der aktuelle Zustand erlaubt keine Sprachsteuerung).

Durch Rückfragen Aktionen wie das Bestätigen von PVDs sind via "Alexa" auch Guthaben-Nachladen möglich. Beispielsweise: "Alexa, lade 100€ auf die Frankiermaschine!" - "SICHER?" - "Ja." - "GELD WIRD GELADEN."

Alternativ können anstelle der Übertragungsprotokolle von "SignalR" auch andere Übertragungsprotokolle verwendet werden, wie zum Beispiel "REST".

Die Statuscodes zwischen Alexa und FP-Navigator sind frei wählbar und auch in anderer Form realisierbar.

Wenn hier im Ausführungsbeispiel eine Anwendung mit dem Sprachassistenten "Alexa" beschrieben wird, so sollen damit andere Sprachassistenten (Siri/Cortana/Google Assistent/...) aber nicht von einer Anwendung ausgeschlossen werden.

Wenn in einem Ausführungsbeispiel davon ausgegangen wird, dass der Lautsprecher mit Tonfrequenzen in einem Frequenzbereich von 250 Hz bis mindestens 4000 Hz betrieben werden kann, so soll damit nicht ausgeschlossen werden, dass Tonfrequenzen bis 20 KHz wiedergegeben werden.

Wenn in anderen Ausführungsbeispielen davon ausgegangen wird, dass alle Anweisungen aus dem Cloud Service 60 bzw. 60* über den entfernten Server 40 bzw. 40* zur Frankiermaschine bzw. zum Personal Computer (PC) 2 und weiter zur Frankiermaschine geleitet werden, kann durch eine Plausibilitätsprüfung eine Fehlsteuerung der Frankiermaschine vermieden werden. Deshalb ist vorgesehen, dass eine Plausibilitätsprüfung von Anweisungen im entfernten Server 40 bzw. 40*, im PC 2 und/oder in der Frankiermaschine vorgenommen wird. Durch diese Plausibilitätsprüfungen sind bei einer Sprachanalyse falsch verstandene Eingaben mit fatalen Auswirkungen erkennbar und können automatisch oder nach Rückfrage an den Benutzer blockiert werden.

Die Erfindung ist nicht auf die vorliegend näher erläuterte Ausführungsform beschränkt, da offensichtlich weitere andere Ausführungen der Erfindung entwickelt bzw. eingesetzt werden können, die - vom gleichen Grundgedanken der Erfindung ausgehend - von den anliegenden Patentansprüchen umfasst werden.

### Bezuqszeichenliste:

- x: Transportrichtung, x-Koordinate
- y: Querverschieberichtung, y-Koordinate
- z: z-Koordinate eines kartesischen Koordinatensystems
- A: Detail der Fig.1
- 1A, 1B, 1C, 1D, ... ,1H: Varianten,
- 1, 1*: Mainboard,
- 2, 2*: Personal Computer (PC)
- 3, 3*: zweite Kommunikationsverbindung
- 4, 4*: erste Kommunikationsverbindung
- 5, 5*: dritte Kommunikationsverbindung
- 50, 50*: Internet
- 6, 6*: vierte Kommunikationsverbindung
- 6a*: fünfte Kommunikationsverbindung
- 6e*: sechste Kommunikationsverbindung
- 6f*: siebente Kommunikationsverbindung
- 6g*: achte Kommunikationsverbindung
- 6h*: neunte Kommunikationsverbindung
- 60, 60*: Cloud Services verschiedener Dienstleister A ... Z
- 7: Steuereinheit
- 70, 70*: Anschluss für das Touchscreen-Display
- 71, 71*: Prozessor (CPU)
- 72, 72*: Programmspeicher (ROM)
- 73, 73*: Arbeitsspeicher (RAM)
- 74, 74*: Ein-/Ausgabe-Schaltung (FPGA)
- 75, 75*: nicht-flüchtiger Speicher (NVM)
- 76, 76*: Sicherheitsmodul
- 77, 77*: erste Kommunikations-Schnittstelle (Ein-/Ausgang)
- 78, 78*: A/D-Wandler
- 79, 79*: Signalverstärker (analog)
- 10: Gehäuseoberschale
- 8: Schallwandler = Mittel zur akustischen Ausgabe
- 9, 9*: internes Mikrofon = Mittel zur akustischen Eingabe
- 10: Gehäuseschale
- 11, 12: Seitenwände der Gehäuseschale
- 13, 14: Vor-, Rückwand der Gehäuseschale
- 15: Oberseite der Gehäuseschale
- 151-155: erster bis fünfter Abschnitt der Oberseite 15
- 1510-1550: erste bis fünfte Öffnung der Oberseite 15
- 156, 157, 158 und 159: Stützrippen auf der Oberseite der Gehäuseschale
- 16: Display (Touchscreen) = Mittel zur manuellen Eingabe und zur optischen Anzeige
- 17: Steckverbinderbuchse für ein Lautsprecherkabel
- 19, 19*: externes Mikrofon = Mittel zur akustischen Eingabe
- 20, 20*: Mobilfunkbetreiber
- 30, 30*: externes Gerät
- 30a*: internes AVS-Gerät
- 38a*: Lautsprecher des internen AVS-Geräts
- 39a*: Mikrofon des internen AVS-Geräts
- 40, 40*: entfernter Server des Frankiermaschinenherstellers bzw. des Herstellers des Gutverarbeitungsgeräts.

## Patentansprüche

1. Gutverarbeitungsgerät mit einer Steuereinheit und einem Mittel zur Kommunikation mit einem entfernten Server des Herstellers des Gutverarbeitungsgeräts, **dadurch gekennzeichnet, dass** ein Sicherheitsmodul (76, 76*) und eine erste Kommunikations-Schnittstelle (77, 77*) mit der Steuereinheit (7, 7*) elektrisch verbunden sind und für eine sichere Kommunikation mindestens mit dem entfernten Server (40, 40*) vorgesehen ist, dass mindestens ein Mittel (8, 8*) zur akustischen Ausgabe von Audio- oder Sound-Dateien vorgesehen und mit der Steuereinheit (7, 7*) elektrisch verbunden ist, wobei die Steuereinheit (7, 7*) einen Programmspeicher (72, 72*) mit einem Programm zur Steuerung der akustischen Ausgabe enthält, wobei das Programm so ausgebildet ist, dass externe Befehle von dem entfernten Server des Herstellers des Gutverarbeitungsgeräts oder aus anderen Quellen des Internets zur Steuereinheit (7, 7*) übermittelt werden können, wobei durch Sicherheitsmaßnahmen verhindert wird, dass die Betriebssicherheit des Gutverarbeitungsgeräts beeinträchtigt oder Schadenscode übermittelt wird.

2. Gutverarbeitungsgerät, nach Anspruch 1, **dadurch gekennzeichnet, dass** die Steuereinheit (7, 7*) auf einem Mainboard (1, 1*) angeordnet ist, und eine CPU (71, 71*) einschließt, dass das Mainboard (1, 1*) Mittel (78, 78*, 79, 79*, 9, 9*, 19, 19*) zur akustischen Eingabe einschließt, welches einen analogen Signalvorverstärker (78, 78*) und einen A/D-Wandler (79, 79*) umfasst, wobei der A/D-Wandler (79, 79*) mit der CPU (71, 71*) der Steuereinheit (7, 7*) elektrisch verbunden ist, wobei der Programmspeicher (72, 72*) der Steuereinheit (7, 7*) ein Programm zur Steuerung der akustischen Eingabe enthält.

3. Gutverarbeitungsgerät, nach den Ansprüchen 1 bis 2, **dadurch gekennzeichnet, dass** in dem Programmspeicher (72, 72*) ein Programm mit einem Sprachassistenten gespeichert enthält, der mit dem Mittel (78, 78*, 79, 79*, 9, 9*, 19, 19*) zur akustischen Eingabe zusammenwirkt, um die Bedienung des Gutverarbeitungsgeräts durch eine Sprachsteuerung zu ermöglichen, wobei das Mittel (78, 78*, 79, 79*, 9, 9*, 19, 19*) zur akustischen Eingabe mindestens ein Mikrofon umfasst.

4. Gutverarbeitungsgerät, nach Anspruch 3, **dadurch gekennzeichnet, dass** das Mittel (78, 78*, 79, 79*, 9, 9*, 19, 19*) zur akustischen Eingabe ein internes Mikrofon (9, 9*) oder eine Anschlussbuchse für ein externes Mikrofon (19, 19*) einschließt.

5. Gutverarbeitungsgerät, nach Anspruch 4, **dadurch gekennzeichnet, dass** das interne Mikrofon (9, 9*) auf einem Mainboard (1, 1*) oder alternativ an einer geeigneten Stelle unter dem Gehäuse des Gutverarbeitungsgeräts angeordnet ist.

6. Gutverarbeitungsgerät, nach Anspruch 5, **dadurch gekennzeichnet, dass** das Mainboard (1, 1*) die Steuereinheit (7, 7*) und den A/D-Wandler (78, 78*) enthält, der mit der Steuereinheit (7, 7*) elektrisch verbunden ist.

7. Gutverarbeitungsgerät, nach Anspruch 6, **dadurch gekennzeichnet, dass** die Steuereinheit (7, 7*) eine CPU (71, 71*) mit einem internen A/D-Wandler enthält, der über einen Signalvorverstärker (79, 79*) mit dem internen Mikrofon (9, 9*) elektrisch verbunden ist.

8. Gutverarbeitungsgerät, nach Anspruch 1, **dadurch gekennzeichnet, dass** zwischen dem entfernten Server (40, 40*) des Herstellers des Gutverarbeitungsgeräts und einem Personal Computer (2, 2*) oder dem Mainboard (1*), die alle über einen Internetanschluss verfügen, Daten und Anweisungen übermittelt werden, dass der entfernte Server (40, 40*) direkt mit der Steuereinheit (7, 7*) oder via dem Personal Computer (2, 2*) mit der Steuereinheit (7, 7*) in einer Kommunikationsverbindung (6a*, 6f*, 6g* oder 4, 4*, 6h*) steht, wobei die Betriebssicherheit des Gutverarbeitungsgeräts durch eine verschlüsselte Datenübertragung zwischen dem Mainboard (1, 1*) und dem Personal Computer (2, 2*) und/oder dem entfernten Server (40, 40*) gesteigert wird.

9. Gutverarbeitungsgerät, nach den Ansprüchen 5 und 6, **dadurch gekennzeichnet, dass** die Steuereinheit (7, 7*) eine CPU (71, 71*) mit einem internen A/D-Wandler enthält, der über den Signalvorverstärker (79, 79*) mit dem externen Mikrofon (19, 19*) elektrisch verbunden ist.

10. Gutverarbeitungsgerät, nach Anspruch 1, **dadurch gekennzeichnet, dass** mindestens ein Mittel (8, 8*) zur akustischen Ausgabe vorgesehen und mit der Steuereinheit (7, 7*) elektrisch verbunden ist, dass ein Mittel zur akustischen Eingabe in einem externen Gerät (30, 30*) vorgesehen ist, wobei das Mittel zur akustischen Eingabe mindestens ein weiteres Mikrofon (31, 31*) enthält, und dass ein im Programmspeicher des Gutverarbeitungsgeräts gespeichertes Programm so ausgebildet ist, dass eine Spracheingabe über das externe Gerät zu einer Befehlsausgabe an die Steuereinheit (7, 7*) und/oder eine akustischen Ausgabe über das Mittel (8, 8*) führt, dass eine erste Kommunikationsverbindung (4, 4*) des entfernten Servers mit dem Gutverarbeitungsgerät (1) oder mit einem Personal Computer (2, 2*) vorgesehen ist, wobei der Personal Computer (2, 2*) über eine zweite Kommunikationsverbindung (3, 3*) mit dem Gutverarbeitungsgerät in Verbindung steht.

11. Gutverarbeitungsgerät, nach Anspruch 10, **dadurch gekennzeichnet, dass** das externe Gerät (30, 30*) eine dritte Kommunikationsverbindung (5, 5*) zu einer externen Station (20, 20*) eines Mobilfunkbetreibers aufweist, wobei die externe Station (20, 20*) des Mobilfunkbetreibers über eine vierte Kommunikationsverbindung (6, 6*) und via Internet (50, 50*) mit einem externen Cloud-Service (60, 60*) in kommunikativer Verbindung steht, dass der entfernte Server (40, 40*) ebenfalls via Internet (50, 50*) mit dem externen Cloud-Service (60, 60*) in Kommunikationsverbindung steht, dass der entfernte Server (40, 40*) bei Bedarf eine erste Kommunikationsverbindung (4, 4*) zu dem Personal Computer (2, 2*) aufbauen kann, wobei der entfernte Server (40, 40*) eine geeignete Software gespeichert aufweist, welche gestattet, die von dem Personal Computer (2, 2*) ausgegebenen Befehle über die eine zweite Kommunikationsverbindung (3, 3*) in das Gutverarbeitungsgerät einzugeben, um eine akustische Ausgabe oder einen andere ausgewählte gewünschte Aktion des Gutverarbeitungsgeräts auszulösen.

12. Gutverarbeitungsgerät, nach einem der Ansprüche 1 oder 10, **dadurch gekennzeichnet, dass** das mindestens eine Mittel (8, 8*) zur akustischen Ausgabe einen elektroakustischen Schallwandler einschließt.

13. Gutverarbeitungsgerät, nach Anspruch 12, **dadurch gekennzeichnet, dass** ein Lautsprecher als Schallwandler eingesetzt wird.

14. Gutverarbeitungsgerät, nach einem der Ansprüche 1 und 13, **dadurch gekennzeichnet, dass** das Gutverarbeitungsgerät als Frankiermaschine mit mindestens ein Mittel (8, 8*) zur akustischen Ausgabe ausgebildet ist, wobei das Mittel (8, 8*) einen D-Verstärker einschließt, der mit dem Lautsprecher elektrisch verbunden ist, dass eine Gehäuseoberschale (10) eine erste Öffnung (1510) in der Oberseite (15) aufweist, wobei der Lautsprecher an der Unterseite der Gehäuseoberschale (10) montiert ist, so dass eine Membrane des montierten Lautsprechers Schallwellen durch die Öffnung nach außen abgibt.

15. Gutverarbeitungsgerät, nach einem der Ansprüche 1 bis 14, **dadurch gekennzeichnet, dass** die Dimensionen der Gehäuseoberschale (10) und die Dimensionen einer Gehäuseunterschale das Gesamtvolumen des Gehäuses bestimmen, welches den Lautsprecher einkapselt, wobei eine Höhe des Gehäuses kleiner ist, als die übrigen Dimensionen, und dass die übrigen Dimensionen des Gehäuses gleich groß realisiert werden, dass eine Kapsel an der Unterseite der Gehäuseoberschale (10) montiert ist, dass die Kapsel den Lautsprecher einkapselt, wobei das Volumen der Kapsel groß genug gewählt ist, so dass ein akustischer Kurzschluss bei tiefen Tonfrequenzen vermieden und eine verständliche Sprachwiedergabe ermöglicht wird.

16. Gutverarbeitungsgerät, nach Anspruch 15, **dadurch gekennzeichnet, dass** der Lautsprecher mit Tonfrequenzen in einem Frequenzbereich von 250 Hz bis mindestens 4000 Hz betrieben wird.

17. Gutverarbeitungsgerät, nach Anspruch 1, **dadurch gekennzeichnet, dass** eine Signierung von Anweisungen auf der Serverseite in Kombination mit einer Benutzeridentifikation (User-ID) und mit einem Zeitstempel (Timecode) und/oder eine Überprüfung eines TLS Zertifikats (Transport Layer Security) vorgenommen wird.
